# EUROPÄISCHE PATENTSCHRIFT

(11) **EP 3 676 943 B1**
(45) Veröffentlichungstag und Bekanntmachung des Hinweises auf die Patenterteilung: **22.12.2021**
(21) Anmeldenummer: 18768752.0
(22) Anmeldetag: 10.08.2018
(51) Int. Cl.: H02K 15/00

(54) **VERFAHREN UND VORRICHTUNG ZUR STATORHERSTELLUNG**
METHOD AND DEVICE FOR PRODUCING A STATOR
PROCÉDÉ ET DISPOSITIF DE FABRICATION DE STATOR

(30) Priorität: 01.09.2017 AT 507382017
(43) Veröffentlichungstag der Anmeldung: 08.07.2020
(73) Patentinhaber: Miba Automation Systems Ges.m.b.H., 4663 Laakirchen (AT)
(72) Erfinder: FALKNER, Andreas, 4600 Wels (AT); PRIMORAC, Mladen-Mateo, 3100 St. Pölten (AT); SCHERRER, David, 4812 Altmünster (AT)
(74) Vertreter: Burger, Hannes
(86) Internationale Anmeldenummer: PCT/AT2018/060187
(87) Internationale Veröffentlichungsnummer: WO 2019/040959

(56) Entgegenhaltungen:
- DE-A1-102014 208 082
- DE-A1-102015 217 936
- US-A1- 2009 249 853
- US-A1- 2016 056 695

## Beschreibung

Die Erfindung betrifft ein Verfahren zur automatisierten Herstellung einer Statorkomponente, sowie eine Vorrichtung für die Herstellung einer Statorkomponente die zumindest ein hohlzylindrisches Statorpaket mit einer Vielzahl von in das Statorpaket eingefügten stabförmigen elektrischen Leiterelementen welche basisseitig als Leiterenden im Wesentlichen gleich weit aus dem Statorpaket herausragen während stirnseitig die Leiterenden entsprechend ihrer jeweilig vorgegebenen Länge aus dem Statorpaket herausragen, umfasst, und wobei das Statorpaket zumindest eine in die äußere Mantelfläche des Statorpakets eingebrachte, sich in Richtung der Statorpakethauptachse erstreckende Positionierungsmarkierung aufweist.

Ein Stator einer elektrischen Maschine umfasst üblicherweise mehrere Spulen welche zur Erzeugung eines elektrischen Drehfelds in einem Statorpaket stromdurchflossen werden. Die Summe der Spulen wird als Wicklung bezeichnet. Zur Ausbildung solcher Spulen ist die Einführung, Verdrehung und Vernetzung von im Wesentlichen stabförmigen elektrischen Leiterelementen bekannt. Die stabförmigen elektrischen Leiterelemente werden in dafür vorgesehene Innennuten eines Statorpakets derart eingeführt, dass ein oder mehrere Leiterelemente innerhalb jeweils einer Innennut radial fluchtend aneinander gereiht werden. Die Anordnung der Leiterelemente innerhalb des Statorpakets gibt damit eine relative Endposition der basisbzw. stirnseitig aus dem Statorpaket herausragenden Leiterenden vor, welche nach einem anschließend erfolgenden Verdrehprozess miteinander verschaltet werden sollen. Bei dem Verdrehprozess werden die Leiterenden zumindest zweier radial angrenzender Schichten von Leiterelementen mittels zumindest einem Umformwerkzeug in bzw. gegen die Umfangsrichtung derart verbogen werden, dass die korrespondierenden Leiterenden in radialer Richtung fluchtend ausgerichtet werden. Durch die anschließende Verschaltung wird dabei ein Teil der Leiterenden mit korrespondierenden Leiterenden der Leiterelemente der anderen Schicht verschaltet. Die relative Lage der Leiterelemente im Statorpaket muss somit mit der relativen Lage von dafür vorgesehenen Ausnehmungen in dem zumindest einen Umformwerkzeug zwingend in Übereinstimmung gebracht werden, da sie schlussendlich der relativen Lage der Leiterenden des fertigen Stators entspricht. Die DE 10 2015 2 17 936 A1 schlägt hierzu vor, dass in einem Positionierungsprozess ein Umformwerkzeug in eine erste Drehstellung bewegt und jedes Leiterende einer ersten Gruppe von Leiterelementen einer Schicht jeweils in eine Ausnehmung des Umformwerkzeugs gesteckt wird. Weiters wird beschrieben, dass das Umformwerkzeug in zumindest eine weitere Drehstellung gedreht und jeweils jedes Leiterende einer weiteren Gruppe der Leiterelemente einer Schicht jeweils in einen der Aufnahmebereiche gesteckt wird. Insgesamt sind so viele Gruppen vorgesehen, bis die Leiterenden aller Leiterelemente die relative Endstellung zueinander aufweisen, indem jedes Leiterende in einer Ausnehmung des Umformwerkzeugs steckt. Durch das Drehen des Umformwerkzeugs zwischen dem Einfügen weiterer Leiterenden in Aufnahmebereiche werden die bereits in den Aufnahmebereichen steckenden Leiterenden jeweils um einen vorbestimmten Drehwinkel um die Achse des Stators gedreht, wodurch für unterschiedliche Gruppen von Leiterelementen jeweils unterschiedliche Drehwinkel oder Positionen eingestellt werden können. Das in der DE 10 2015 217 936 A1 beschriebene Verfahren erlaubt somit die Positionierung von Leiterelementen innerhalb eines Umformwerkzeugs damit eine vorgegebene Endstellung der Leiterelemente, welche für die korrekte Verschaltung des Stators notwendig ist, eingehalten wird. Weitere Verfahren zur Statorherstellung sind aus DE 10 2014 208082 A1, US 2009/249853 A1 und US 2016/056695 A1 bekannt.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine einfache Herstellung einer Statorkomponente für einen elektrischen Antrieb vorzunehmen. Insbesondere sollen hierbei die Prozessabläufe während der Herstellung derart optimiert werden, dass eine deutliche Reduktion der Prozesszeiten und Erhöhung der Prozesssicherheit ermöglicht werden.

Diese Aufgabe wird durch eine Vorrichtung und ein Verfahren gemäß den Ansprüchen gelöst. Erfindungsgemäß ist ein Verfahren zur automatisierten Herstellung einer Statorkomponente vorgesehen. Das Verfahren umfasst die Schritte:
- Bereitstellen eines hohlzylindrischen Statorpakets mit einer Vielzahl von in Richtung der Statorpakethauptachse gestapelten Statorblechen, welches eine Vielzahl von sich in Richtung der Statorpakethauptachse erstreckenden, in Umfangsrichtung verteilt angeordneten und an der Innenseite des hohlzylindrischen Statorpakets von einer Basisseite zu einer Stirnseite des Statorpakets durchgehend erstreckenden Innennuten aufweist die mit jeweils zumindest einem stabförmigen elektrischen Leiterelement derart bestückt sind, dass basisseitig die stabförmigen elektrischen Leiterelemente als Leiterenden im Wesentlichen gleich weit aus dem Statorpaket herausragen während stirnseitig die stabförmigen elektrischen Leiterelemente als Leiterenden entsprechend ihrer jeweilig vorgegebenen Länge aus dem Statorpaket herausragen, und das Statorpaket zumindest eine in die äußere Mantelfläche des Statorpakets eingebrachte, sich in Richtung der Statorpakethauptachse erstreckende Positionierungsmarkierung aufweist,
- Bereitstellen zumindest eines Umformwerkzeugs, welches zur Aufnahme der jeweiligen stirnseitigen Leiterenden in Umfangsrichtung um eine Werkzeughauptachse entsprechend verteilt angeordneten Ausnehmungen, wobei das zumindest eine Umformwerkzeug zumindest entlang der Werkzeughauptachse verschiebbar ausgeführt sein soll,
- Positionierung des Statorpakets in einer Haltevorrichtung,
wobei beim erfindungsgemäßen Verfahren
- das Statorpaket mittels einer in Richtung der Statorpakethauptachse verschiebbaren und in Umfangsrichtung des Statorpakets rotierbaren Greifvorrichtung einer Greifapparatur aufgegriffen wird,
- das Statorpaket in Umfangsrichtung um die Statorpakethauptachse rotiert wird wodurch die Positionierung der Vielzahl der stabförmigen elektrischen Leiterelemente mit den dafür vorgesehenen Ausnehmungen des zumindest einen Umformwerkzeugs anhand der in die Mantelfläche des Statorpakets eingebrachten Positionsmarkierung in Übereinstimmung gebracht wird,
- zumindest Teile der Mantelfläche des Statorpakets mittels einer optischen Sensoreinheit erfasst werden,
- die Winkellage des Statorpakets anhand der zumindest einen Positionsmarkierung bestimmt wird,
- die Berechnung von Korrekturwerten zur Ausrichtung des Statorpakets um die Statorpakethauptachse mittels Anlagensteuerung durchgeführt wird,
- eine Winkelkorrektur des Statorpakets durch Rotation der Greifvorrichtung um die Statorpakethauptachse durchgeführt wird bis die aus dem Statorpaket herausragenden Leiterenden des Statorpakets mit der Position der in Umfangsrichtung um die Werkzeughauptachse entsprechend verteilt angeordneten Ausnehmungen des zumindest einen Umformwerkzeugs fluchten,
- das Statorpaket in der Haltevorrichtung mittels einer Greifvorrichtung entsprechend einer vorgegebenen Position in Richtung der Statorpakethauptachse positioniert wird. Durch die angegebene Vorgangsweise wird die korrekte Ausrichtung der Leiterenden eines mit Leiterelementen bestückten Statorpakets gegenüber dem zumindest einem Umformwerkzeug für nachfolgende Umformoperationen der Leiterelemente mit höchster Präzision hinsichtlich der Positionierung erzielt. Eine Bestückung des Blechpakets bzw. des Umformwerkzeugs innerhalb der Umformvorrichtung entfällt gänzlich was wesentliche Vorteile bietet. Durch das automatisierte Verfahren wird die Prozesszeit für den Ausrichtprozess der Leiterenden gegenüber des Umformwerkzeugs signifikant verkürzt und das manuelle Eingreifen eines Anlagenbedieners gänzlich vermieden, wodurch die Prozesssicherheit und Qualität der produzierten Statorkomponenten erhöht werden. Überdies ermöglicht das Verfahren, dass eine Vielzahl von mit Leiterelementen bestückten Statorpaketen in z.B. einem Vormaterialspeicher gelagert werden, auf welche die Greifapparatur bei Bedarf zugreifen kann. In der Folge sinkt die Gesamtprozesszeit da die Bestückung des Umformwerkzeugs mit Leiterelementen innerhalb der Anlage gänzlich entfällt.

Weiters kann es zweckmäßig sein, wenn als zumindest eine in Richtung der Statorpakethauptachse eingebrachte Positionierungsmarkierung in der Mantelfläche des Statorpakets eine von der Basisseite ausgehend über zumindest 10%, bevorzugt 25% der Höhe der gestapelten Statorbleche erstreckende Positionsmarkierung verwendet wird. Es hat sich gezeigt, dass eine Längsausdehnung der Positionsmarkierung gegenüber einer punktförmigen Markierung die Ansprechgenauigkeit der Sensoreinheit deutlich verbessert werden kann.

Ferner kann vorgesehen sein, dass als zumindest eine in Richtung der Statorpakethauptachse eingebrachte Positionierungsmarkierung in der Mantelfläche des Statorpakets eine im Querschnitt V- oder U-förmige Positionsnut mit zwei sich in Richtung der Statorpakethauptachse erstreckenden Längskanten verwendet wird.

Durch die Verwendung von V- oder U-förmigen Positionsnuten wird dem Statorpaket gegenüber einer Rechtecksnut nur geringfügig Material entnommen, wodurch der magnetische Fluss innerhalb des Statorpakets minimal gestört wird. Die Verwendung von geradlinigen Kanten erleichtert überdies die Positionsermittlung mittels optischer Sensoreinheit wodurch die Prozesssicherheit erhöht wird.

Darüber hinaus kann vorgesehen sein, dass zur Bestimmung einer Referenzposition der zumindest einen in Richtung der Statorpakethauptachse eingebrachten Positionierungsmarkierung die Vermessung der beiden sich in Richtung der Statorpakethauptachse erstreckenden Längskanten der im Querschnitt V- oder U-förmigen Positionsnut erfolgt und die Mitte der beiden Kantenpositionen in Umfangsrichtung als Referenzposition verwendet wird. Die Verwendung von V- oder U-förmigen Positionsnuten als Positionsmarkierung weist den Vorteil auf, dass diese beiden Querschnittsgeometrien jeweils einen "tiefsten Punkt" aufweisen, welcher besonders geeignet für eine exakte Bestimmung der Referenzposition ist.

Vorteilhaft ist auch eine Ausprägung, gemäß welcher vorgesehen sein kann, dass bei dem Verfahren als optische Sensoreinheit ein Kontrastsensor verwendet wird.

Entsprechend der Baugröße der Statorkomponente hat sich bei größeren Abmessungen des Statorpakets die Verwendung von Kontrastsensoren als sehr zweckdienlich und kostengünstig erwiesen.

Gemäß einer Weiterbildung ist es jedoch möglich, als optische Sensoreinheit ein Lasersensor verwendet wird. Die Lasersensoren ist besonders vorteilhaft aufgrund der hohen Messfrequenz und der hohen Reichweite bei exzellenter Ortsauflösung. Überdies werden eventuelle Streulichteffekte durch z.B. Umgebungslicht weitestgehend vermeidbar.

Ferner kann es zweckmäßig sein, wenn während der Erfassung der Mantelfläche des Statorpakets die optische Sensoreinheit einen Winkelbereich von mehr als 5° über den Umfang der Mantelfläche des Statorpakets sowie eine Länge in Richtung der Statorpakethauptachse ausgehend von der Basisseite des Statorpakets von zumindest 10%, bevorzugt 25%, vermisst. Durch Verwendung eines Messbereichs anstatt der Erfassung einzelner Punkte der Mantelfläche wird die Genauigkeit der Positionserfassung mittels optischer Sensoreinheit erhöht. Weiters wirkt sich die Größe der gleichzeitig vermessenen Oberfläche des Statorpakets positiv auf die erforderliche Ausrichtzeit aus.

Darüber hinaus kann vorgesehen sein, dass die Ausrichtung des Statorpakets in Richtung der Statorpakethauptachse derart erfolgt, dass die Basisseite des Statorpakets mit einem in der Haltevorrichtung vorgesehenen Anschlag in Kontakt gebracht wird. Diese Vorgangsweise stellte eine einfache und kostengünstige Methode dar das Statorpaket in Richtung der Statorpakethauptachse korrekt zu positionieren und für nachfolgende Umformvorgänge geeignet abzulegen. Eine spätere Umformung der basisseitigen Leiterenden wird dadurch begünstigt, dass die basisseitigen Leiterenden mit gleicher Länge aus dem Statorpaket herausragen.

Weiters kann vorgesehen sein, dass im Anschluss an die Winkelkorrektur die Haltevorrichtung das Statorpaket einspannt und die Greifvorrichtung das Statorpaket freigibt. Durch das Einspannen des Statorpakets wird ein Verrutschen sowohl in Richtung des Statorpakethauptachse, sowie in Umfangs- oder Querrichtung vermieden. Weiters ist durch diese Einspannung eine Bewegung der Haltevorrichtug ermöglicht ohne einen weiteren Ausrichtvorgang des Statorpakets durchführen zu müssen.

Außerdem kann vorgesehen sein, dass im Anschluss an die Einspannung des Statorpakets die Haltevorrichtung senkrecht zur Statorpakethauptachse verschoben wird, bis die Statorpakethauptachse mit der Werkzeughauptachse des zumindest einen Umformwerkzeugs fluchtend wird. Hiermit wird ermöglicht, dass die Greifapparatur kostengünstiger ausgebildet sein kann und nicht als z.B. mehrachsige Robotereinheit ausgeführt sein muss. Dies ermöglicht eine effiziente und kostengünstige Auslegung der Vorrichtung zur Herstellung einer Statorkomponente.

Gemäß einer besonderen Ausprägung ist es möglich, dass im Anschluss an die Einspannung des Statorpakets das zumindest eine Umformwerkzeug in Richtung der Statorpakethauptachse an das Statorpaket herangefahren wird und stirnseitig die Leiterenden mit den dafür vorgesehenen Ausnehmungen umschließt. Durch die vorgegebene Position der Ausnehmungen des zumindest einen Umformwerkzeugs gegenüber der in Umfangsrichtung und Richtung der Statorpakethauptachse fluchtend ausgerichteten korrespondierenden Leiterenden des Statorpakets ist ein gefahrloses Heranfahren des zumindest einen Umformwerkzeugs ermöglicht. Eine deutliche Reduktion der Prozesszeit wird somit erreicht.

Entsprechend einer vorteilhaften Weiterbildung kann vorgesehen sein, dass mit der zumindest einen in Richtung der Statorpakethauptachse eingebrachte Positionierungsmarkierung ein Arretiermittel in Kontakt gebracht wird. Hiermit wird ein Verdrehen des Statorpakets um seine Umfangsrichtung verhindert, was insbesondere bei der sequenziellen Umformung von mehreren Lagen oder Schichten von Leiterenden von Bedeutung ist.

Erfindungsgemäß ist eine Vorrichtung für die automatisierte Herstellung einer Statorkomponente die zumindest aus einem hohlzylindrischen Statorpaket welches aus einer Vielzahl von in Richtung der Statorpakethauptachse gestapelten Statorblechen, und einer Vielzahl von in Umfangsrichtung verteilten an der Innenseite des hohlzylindrischen Statorpakets von einer Basisseite zu einer Stirnseite in Richtung der Statorpakethauptachse durchgehend erstreckenden Innennuten besteht, die mit jeweils zumindest einem stabförmigen elektrischen Leiterelement bestückt sind und wobei basisseitig die stabförmigen elektrischen Leiterelemente als im Wesentlichen gleich weit aus dem Statorpaket herausragende Leiterenden ausgebildet sind während stirnseitig die stabförmigen elektrischen Leiterelemente als herausragende Leiterenden in Abhängigkeit ihrer jeweilig vorgegebenen Länge aus dem Statorpaket herausragend ausgebildet sind, und das Statorpaket zumindest eine in die äußere Mantelfläche des Statorpakets in Richtung der Statorpakethauptachse erstreckende eingebrachte Positionierungsmarkierung aufweist, wobei die Vorrichtung folgende besondere Merkmale umfasst:
- zumindest eine Haltevorrichtung die geeignet für die Fixierung des hohlzylindrischen Statorpakets ist,
- zumindest eine Greifapparatur umfassend eine Greifvorrichtung welche geeignet für den Transport bzw. Positionierung des hohlzylindrischen Statorpakets zur bzw. innerhalb der Haltevorrichtung ist,
wobei die Vorrichtung zur Statorkomponentenherstellung insbesondere vorsieht dass:
- die zumindest eine Greifvorrichtung geeignet ist das hohlzylindrische Statorpaket an seiner Innenseite zu spannen und die Greifapparatur über zumindest eine Antriebseinheit verfügt welche zur Positionierung entlang der Richtung der Statorpakethauptachse, sowie senkrecht zur Richtung der Statorpakethauptachse verschiebbar ausgeführt ist, über zumindest eine weitere Antriebseinheit verfügt, welche zur Positionierung des Statorpakets in Umfangsrichtung geeignet ist und
- zumindest eine optische Sensoreinheit auf oder innerhalb der Greifapparatur angebracht ist, welche der Greifvorrichtung und demzufolge der Mantelfläche des aufgenommenen Blechpakets zugewandt ist. Die beschriebene Vorrichtung ermöglicht, dass das Statorpaket gleichzeitig um seine Hauptachse rotiert und dabei die Mantelkontur vermessen werden kann. Weiters hat die räumliche Nähe der Anbringung der optischen Sensoreinheit an der Greifapparatur bzw. der Greifvorrichtung den Vorteil, dass der Mess- und Ausrichtvorgang des Statorpakets bereits direkt nach der Aufnahme des Statorpakets durch die Greifvorrichtung erfolgen kann, da die optische Sensoreinheit in direkter Sichtverbindung zur Greifvorrichtung und somit zur Mantelfläche des aufgespannten Statorpakets angebracht ist, wodurch sich die erforderliche Prozesszeit herabgesetzt.

Ferner kann vorgesehen sein, dass die zumindest eine optische Sensoreinheit ein Kontrastsensor ist, was eine kostengünstige Gestaltung der Vorrichtung erlaubt.

Darüber hinaus kann vorgesehen sein, dass die zumindest eine optische Sensoreinheit ein Lasersensor ist. Hierbei finden in besonders vorteilhafter Weise die hohe Messfrequenz und Reichweite bei exzellenter Ortsauflösung von Laseroptiken Anwendung. Überdies werden dadurch eventuelle Streulichteffekte durch z.B. Umgebungslicht weitestgehend vermeidbar.

Vorteilhaft ist auch eine Ausprägung, gemäß welcher vorgesehen sein kann, dass zwischen der zumindest einen optischen Sensoreinheit und der Greifvorrichtung der Greifapparatur eine für die optische Sensoreinheit transparente Schutzvorrichtung angebracht ist. Um eventuelle Verunreinigungen der optischen Sensoreinheit durch z.B. Staub aus der Umgebung, oder auch mechanische Beschädigung zu vermeiden hat sich die Anbringung einer Schutzvorrichtung bewährt, welche im Bedarfsfall einfach und kostengünstig zu ersetzen ist ohne dass die optische Sensoreinheit gänzlich getauscht werden muss.

Gemäß einer Weiterbildung ist es möglich, dass die optische Sensoreinheit mit der Greifvorrichtung über eine elektronische Anlagensteuerung verbunden ist. Die Verwendung einer elektronischen Anlagensteuerung ermöglicht eine rasche bzw. automatisierte Anpassung der vorgegebenen Referenzwerte für die zu vermessende Mantelfläche eines Statorpakets was insbesondere bei verschiedenen Größen von Statorpaketen in Richtung der Statorpakethauptachse oder auch in radialer Richtung von Bedeutung sein kann da dadurch eine zeitaufwendige Kalibrierung der optischen Sensoreinheit nur einmalig durchgeführt werden muss.

Femer kann es zweckmäßig sein, wenn in der Haltevorrichtung ein senkrecht zur Richtung der Statorpakethauptachse eingebrachte Positionierungsmarkierung verschiebbares Arretiermittel vorgesehen ist. Durch das Arretiermittel, welches z.B. als ein Bolzen, Schieber oder dgl. ausgeführt sein kann, wird ein Verdrehen des Statorpakets um seine Umfangsrichtung verhindert, was insbesondere bei der sequenziellen Umformung von mehreren Lagen oder Schichten von Leiterenden von Bedeutung ist.

Darüber hinaus kann vorgesehen sein, dass die Haltevorrichtung senkrecht zur Statorpakethauptachse verschiebbar ist. Durch die Verwendung einer verschiebbaren Haltevorrichtung mit bereits vorausgerichtetem Statorpaket, kann die Positionierung des Statorpakets bzw. der ausgerichteten Leiterenden mit ihrer Statorpakethauptachse fluchten mit der Werkzeughauptachse des zumindest einen Umformwerkzeugs in sehr einfacher und positionsgenauer Weise erfolgen, da die Verschieberichtung der Haltevorrichtung hierbei im Wesentlichen parallel zur Statorpakethauptachse ist. Hierdurch wird die Komplexität der Vorrichtung erheblich gegenüber der Verwendung einer mehrachsig ausgeführten Greifapparatur, welche z.B. als Roboterarm die Positionierung des Statorpakets in Umfangsrichtung, in Richtung der Statorpakethauptachse, sowie die Übereinstimmung der Statorpakethauptachse mit der Werkzeugbauptachse übernimmt, verringert. Damit verbunden sind eine geringe Gesamtvorrichtungsfläche, sowie geringerer Kostenaufwand.

Die Anlagensteuerung kann durch jede mögliche erdenkliche Art von Steuerung gebildet sein. Dies kann beispielsweise ein Industrierechner, eine speicherprogrammierbare Steuerung oder eine sonstige Steuerung sein, welche dazu geeignet ist, die von der/den optischen Sensoreinheiten erfassten Daten in Bewegungs- bzw. Positionsbefehle für die Vorrichtung zur Herstellung einer Statorkomponente umzusetzen. Hierbei sind mit der elektronischen Anlagensteuerung unter anderem verbunden: die Greifapparatur, die Greifvorrichtung, die Haltevorrichtung, der/die optischen Sensoren.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Statorkomponente;
- Fig. 2: eine perspektivische Ansicht von Positionierungsmarkierungen ausgeführt als Vbzw. U-Positionsnut;
- Fig. 3: eine perspektivische Ansicht eines kombinierten Umformwerkzeugs;
- Fig. 4: eine perspektivische Darstellung einer Greifapparatur mit Greifvorrichtung und aufgespanntem Statorpaket sowie zweier möglicher Positionen zur Anbringung einer optischen Sensoreinheit;
- Fig. 5: einen Grundriss einer möglichen Ausführung einer Vorrichtung zur Herstellung einer Statorkomponente.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

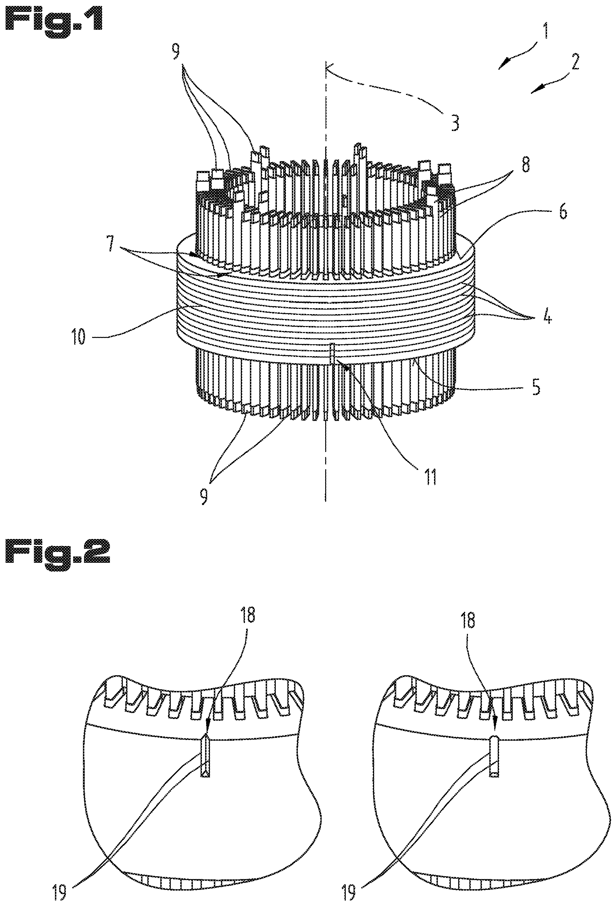

Fig. 1 zeigt eine vereinfachte perspektivische Ansicht einer Statorkomponente 1, welche im Kontext dieser Anmeldung als Halbzeug zur Fertigung eines Stators für eine elektrische Antriebseinheit zu verstehen ist. Die Statorkomponente 1 umfasst ein hohlzylindrisches Statorpaket 2, welches eine Statorpakethauptachse 3 entlang seiner Rotationsachse aufweist. Das Statorpaket 2 umfasst eine Vielzahl von in Richtung der Statorpakethauptachse 3 gestapelten Statorblechen 4. Das Statorpaket 2 weist eine Vielzahl von Innennuten 7 auf, die sich in Umfangsrichtung verteilt an der Innenseite des Statorpakets 2 von einer Basisseite 5 durchgehend zu einer Stirnseite 6 erstrecken. Diese Innennuten dienen als Aufnahme für jeweils zumindest ein stabförmiges elektrisches Leiterelement 8 Wenn das Statorpaket 2 mehrlagig ausgeführt werden soll, werden die stabförmigen elektrischen Leiterelemente 8 derart in den jeweiligen Innennuten 7 positioniert, dass sie in radialer Richtung fluchtend angeordnet sind und voneinander jeweils elektrisch isoliert sind. Im Falle des beispielhaft gezeigten Statorpakets 2 in

Fig. 1 werden jeweils zwei stabförmige elektrische Leiterelemente 8 in den Innennuten 7 verwendet, was einer zweischichtigen Wicklung entspricht. Je nach Größe der Statorkomponente 1 können die Anzahl der Statorbleche 4, sowie die Längen der stabförmigen elektrischen Leiterelemente 8 unterschiedlich sein. Die dabei verwendeten stabförmigen elektrischen Leiterelemente 8 können jedoch auch innerhalb der Ausführung eines Statorpakets 2 unterschiedliche Längen aufweisen, da sie jeweils als Teil einer Spule bzw. eines Anschlusses im fertigen Stator vorgesehen sein können. Die relative Anordnung der individuellen stabförmigen elektrischen Leiterelemente 8 ist somit durch ihre spätere Verwendung definiert und gibt ihre Position in Umfangsrichtung und radialer Richtung im Statorpaket 2 vor. In gleicher Weise sind die Längen der individuellen stabförmigen elektrischen Leiterelemente 8 vorgegeben.

Die stabförmigen elektrischen Leiterelemente 8 ragen als Leiterenden 9 auf der Basisseite 5 im Wesentlichen mit der gleichen Länge heraus, während auf der Stirnseite 6 die stabförmigen elektrischen Leiterelemente 8 als Leiterenden 9 entsprechend ihrer jeweilig vorgegebenen Länge aus dem Statorpaket 2 herausragen.

Das in Fig. 1 dargestellte Statorpaket 2 weist zudem eine Mantelfläche 10 auf, in welcher sich zumindest eine von der Basisseite 5 in Richtung der Statorpakethauptachse 3 eingebrachte Positionierungsmarkierung 11 erstreckt. Diese zumindest eine Positionierungsmarkierung 11 dient als Referenzmarkierung, mit welcher den im Statorpaket 2 angeordneten stabförmigen elektrischen Leiterelemente 8 durch ihre vorgegebene Anordnung eine eindeutige Position in Umfangs- und Radialrichtung zuweisen lässt.

In Fig. 2 sind zwei beispielhafte Ausführungsformen von Positionierungsmarkierungen 11 in Form von Positionsnuten 18 dargestellt. Die linke Darstellung entspricht einer Positionsnut 18 mit V-förmigem Querschnitt, während die rechte Darstellung eine Positionsnut 18 mit U-förmigem Querschnitt darstellt, bzw. Positionsnuten 18 weisen jeweils zwei geradlinige Längskanten 19 in Richtung der Statorpakethauptachse auf. Durch solche Positionierungsmarkierungen 11 wird die Erfassung der Winkellage um die Statorpakethauptachse 3 des Statorpakets 2 in einfacher Weise mittels zumindest einer optischen Sensoreinheit 17 ermöglicht.

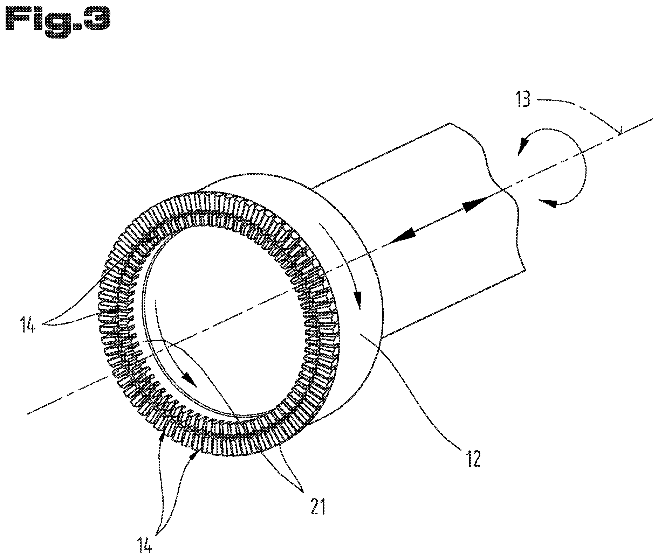

In Fig. 3 wird eine schematische Darstellung eines Umformwerkzeuges 12 mit einer Werkzeughauptachse 13 gezeigt. Im gezeigten Beispiel ist das Umformwerkzeug 12 zweireihig ausgeführt, was bedeutet, dass zwei gegenläufig rotierbare Umformwerkzeuge 12 mit jeweils einer Vielzahl von um die Werkzeughauptachse 13 in Umfangsrichtung verteilten Ausnehmungen 14 aufweisen. Die zweireihige Ausführung des Umformwerkzeugs 12 korrespondiert somit mit der zweischichtigen Wicklung des Statorpakets 2. Eine höhere Anzahl von Schichten bedingt somit eine entsprechend höhere Anzahl von Teilwerkzeugen 21 am Kopf des Umformwerkzeugs 12. Die Anzahl und Anordnung der Ausnehmungen 14 des Umformwerkzeugs 12 entspricht allerdings immer der Anzahl und Anordnung der stabförmigen elektrischen Leiterelemente 8 des Statorpakets 2. In der Ausgangsstellung für den Umformprozess wird das zumindest eine Umformwerkzeug 12 in eine Referenzposition gebracht. Das Umformwerkzeug 12 soll weiters in Richtung seiner Werkzeughauptachse 13 verschiebbar sein und die Teilwerkzeuge 21 in bzw. gegen die Umfangsrichtung rotierbar ausgeführt sein.

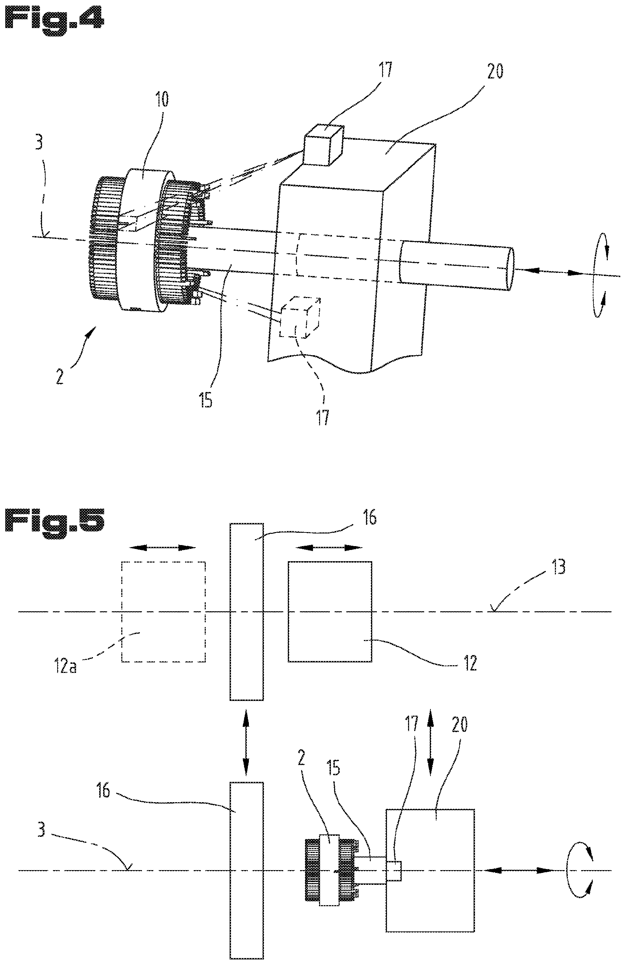

In Fig. 4 ist eine Greifapparatur 20 dargestellt, an deren Greifvorrichtung 15 ein Statorpaket 2 aufgespannt ist. Die Greifapparatur 20 soll über zumindest eine Antriebseinrichtung (nicht dargestellt) verfügen die eine Rotation der Greifvorrichtung 15 um die Statorpakethauptachse 3 ermöglicht. Weiters soll die Greifapparatur 20 mit zumindest einer weiteren Antriebseinheit (nicht dargestellt) ausgestattet sein, welche eine Verschiebung der Greifvorrichtung 15 in Richtung der Statorpakethauptachse 3 ermöglicht. Die Greifapparatur 20 kann auch weitere Antriebe und/oder Vorrichtungen aufweisen um bspw. eine Rotation und/oder Verschiebung des Statorpakets 2 in Vertikal- und/oder Horizontalrichtung zu ermöglichen. Die Greifapparatur 20 kann demnach z.B. als mehrachsige Robotervorrichtung ausgeführt sein. Wie ebenfalls aus Fig. 4 ersichtlich ist, soll an oder innerhalb (schraffiert dargestellt) der Greifapparatur 20 zumindest eine optische Sensoreinheit 17 angebracht sein. Die optische Sensoreinheit 17 ist derart montiert, dass eine ungehinderte Sichtverbindung zur Greifvorrichtung 15 und damit zur Mantelfläche 10 eines aufgespannten Statorpakets 2 besteht.

In Fig. 5 ist ein schematischer Grundriss einer besonderen Ausführungsform einer Vorrichtung zur Herstellung einer Statorkomponente 1 dargestellt. Wie aus Fig. 5 ersichtlich sind die Statorpakethauptachse 3 und die Werkzeughauptachse 13 parallel zueinander ausgerichtet, was durch eine senkrecht zur Statorpakethauptachse 3 verschiebbaren 1-Ialtevorrichtung 16 kompensierbar ist. Weiters ist ein zweites Umformwerkzeug 12a schematisch angedeutet. Dieses zweite Umformwerkzeug 12a kann zur simultanen Umformung der basisseitigen Leiterenden 9 verwendet werden, wenn die Umformung der stirnseitigen Leiterenden 9 mittels erstem Umformwerkzeug 12 erfolgt.

Im Folgenden wird das erfindungsgemäße Verfahren zur Herstellung einer Statorkomponente 1 beschrieben.

In einem ersten Verfahrensschritt wird ein hohlzylindrisches Statorpaket 2 bereitgestellt, welches die o.g. Merkmale umfasst.

In einem zweiten Verfahrensschritt wird zumindest ein Umformwerkzeug 12 bereitgestellt.

In einem dritten Verfahrensschritt wird das Statorpaket 2 in einer Haltevorrichtung 16 derart positioniert, dass ein späterer Verfahrensschritt der Umformung der Leiterenden 9 ermöglicht wird. In diesem dritten Verfahrensschritt werden mehrere Teilschritte ausgeführt, wobei
a) das Statorpaket 2 mittels einer Greifvorrichtung 15 innenseitig gespannt und somit zeitweilig für den Mess- und Positionierungsvorgang fixiert wird;
b) anschließend wird das Statorpaket 2 um die Statorpakethauptachse 3 rotiert und die Mantelfläche 10 des Statorpakets 2 mittels einer optischen Sensoreinheit 17 erfasst;
c) die Winkellage des Statorpakets 2 wird anhand der zumindest Positionierungsmarkierung 11 bestimmt;
d) die Berechnung von Korrekturwerten zur Ausrichtung des Statorpakets 2 um die Statorpakethauptachse 3 erfolgt über eine Anlagensteuerung (nicht weiter ausgeführt) wobei die vorgegebene relative Lage der aus dem Statorpaket 2 herausragenden Leiterenden 9 des Statorpakets 2 mit der Position der in Umfangsrichtung um die Werkzeughauptachse 13 entsprechend verteilt angeordneten Ausnehmungen 14 des zumindest einen Umformwerkzeugs 12 verglichen wird;
e) anschließend erfolgt eine Winkelkorrektur des Statorpakets 2 durch Rotation der Greifvorrichtung 15 um die Statorpakethauptachse 3 bis die vorgegebene Position der Leiterenden 9 mit der Position der Ausnehmungen 14 des zumindest einen Umformwerkzeugs 12 fluchten;
f) sobald die Referenzposition des Statorpakets 2 eingenommen wurde wird das Statorpaket 2 in der Haltevorrichtung 16 mittels der Greifvorrichtung 15 entsprechend einer vorgegebenen Position in Richtung der Statorpakethauptachse 3 positioniert.

Wie aus Fig. 1 bzw. 2 ersichtlich soll die in Richtung der Statorpakethauptachse 3 in die Mantelfläche 10 des Statorpakets 2 eingebrachte Positionierungsmarkierung 11 von der Basisseite 5 ausgehend zumindest 10%, bevorzugt 25% der Höhe der gestapelten Statorbleche 4 aufweisen. Im gezeigten Beispiel in Fig. 1 wird eine Statorkomponente 1 mit etwa 80 Statorblechen 4 schematisch dargestellt. Ja nach Statortyp können auch Statorkomponenten 1 mit erheblich höherer Anzahl (z.B. 120 bis 480) an Statorblechen 4 erforderlich sein. Hierzu kann es von Vorteil sein, wenn mehr als eine Positionierungsmarkierung 11 in die Mantelfläche 10 des Statorpakets 2 eingebracht wird, wie schematisch in Fig.4 angedeutet. Es hat sich als vorteilhaft erwiesen wenn, im Falle der Verwendung von mehreren Positionierungsmarkierungen 11, diese die gleiche Länge aufweisen und um jeweils 90° in Umfangsrichtung versetzt, sowie in Richtung der Statorpakethauptachse 3 um jeweils eine Länge der Positionierungsmarkierung 11 versetzt, in die Mantelfläche 10 eingebracht werden, was eine Zuordnung der eingesetzten Statorpakete 2 zu einem bestimmten Statortyp ermöglicht. Der Positionierungsvorgang des Statorpakets 2 erfolgt unabhängig von der Größe des Statorpakets 2 in der oben beschriebenen Weise und verwendet zur Bestimmung der Referenzposition die Positionierungsmarkierung 11, welche von der Basisseite 5 ausgeht.

Wie besonders gut aus Fig. 2 ersichtlich, kann die Verwendung von im Querschnitt V- oder U-förmigen Positionsnuten 18 als Positionierungsmarkierung 11 von Vorteil sein. Die im Querschnitt V- oder U-förmigen Positionsnuten 18 sind fertigungstechnisch einfach in die Mantelfläche 10 des Statorpakets 2 einzubringen und weisen jeweils zwei sich in Richtung der Statorpakethauptachse 3 erstreckende Längskanten 19 auf. Diese Längskanten 19 sollen geradlinig verlaufen um für die Vermessung mittels optischer Sensoreinheit 17 bestmöglich geeignet zu sein, wobei die Mitte der beiden Kantenpositionen in Umfangsrichtung als Referenzposition verwendet wird.

Zur Vermessung und Lagebestimmung der Positionierungsmarkierung 11 kann als zumindest eine optische Sensoreinheit 17 ein Kontrastsensor verwendet werden. Eine Kombination eines Kontrastsensors mit einem oder mehreren Kontrastsensoren, welche zur Vermessung des Statorpakets 2 verwendet werden ist denkbar. Ebenso ist die Kombination eines oder mehrerer Kontrastsensoren mit einem oder mehreren Lasersensoren, wie auch die alleinige Verwendung mehrerer Lasersensoren als zumindest eine optische Sensoreinheit 17 denkbar.

Wie besonders gut in Fig. 5 zu sehen weist das Statorpaket 2 die gleiche Hauptachse (Statorpakethauptachse 3) auf wie die Rotationsachse der Greifvorrichtung 15. In der dargestellten Ausführung wird eine Greifapparatur 20 gezeigt, welche die Greifvorrichtung 15 in Umfangsrichtung des Statorpakets 2 rotieren kann und welche in Richtung der Statorpakethauptachse 3 verschoben werden kann. Eine Positionierung des ausgerichteten Statorpakets 2 innerhalb einer vorgegebenen Position der Haltevorrichtung 16 ist somit in einfacher Weise realisierbar. Dabei wird die Basisseite 5 des Statorpakets 2 mit einem in der Haltevorrichtung 16 (nicht gezeigten) vorgesehenen Anschlag in Kontakt gebracht.

Anschließend wird das Statorpaket 2 innerhalb der Haltevorrichtung 16 mittels z.B. mehrerer Spannbacken oder einer basisseitig vorliegenden Leiterelementhalterung (nicht dargestellt) eingespannt und die Greifvorrichtung 15 gibt das Statorpaket 2 frei.

In einer besonderen Ausführungsform wird die Haltevorrichtung 16 senkrecht zur Statorpakethauptachse 3 derart verschoben bis die Statorpakethauptachse 3 mit der Werkzeughauptachse 13 des zumindest einen Umformwerkzeugs 12, 12a fluchtend wird.

Anschließend kann das zumindest eine Umformwerkzeug 12 in Richtung der Statorpakethauptachse 3 bzw. seiner Werkzeughauptachse 13 herangefahren werden um die stirnseitig aus dem ausgerichteten Statorpaket 2 herausragenden Leiterenden 9 mit den dafür vorgesehenen Ausnehmungen 14 des zumindest einen Umformwerkzeugs 12 zu umschließen. Analog dazu kann ein Heranfahren eines weiteren Umformwerkzeugs 12a an der Basisseite 5 des Statorpakets 2 erfolgen.

Insbesondere kann vorgesehen sein, dass mit der zumindest einen in Richtung der Statorpakethauptachse 3 eingebrachten Positionierungsmarkierung 11 bzw. zumindest einer der im Querschnitt V- oder U-förmigen Positionsnuten 18 ein Arretiermittel 22 (nicht dargestellt) in Anschlag gebracht wird. Dieses Arretiermittel 22 kann bspw. als Bolzen, Schieber, Feder oder dgl. ausgeführt sein und dementsprechend innerhalb der Haltevorrichtung 16 angebracht sein.

Eine schematische Darstellung einer Vorrichtung für die automatisierte Herstellung einer Statorkomponente 1 ist in Fig. 5 gezeigt. Die Vorrichtung soll zumindest folgende Merkmale aufweisen:
- zumindest eine Haltevorrichtung 16 die geeignet für die Fixierung des hohlzylindrischen Statorpakets 2 ist,
- zumindest eine Greifapparatur 20 umfassend eine Greifvorrichtung 15 welche geeignet für den Transport bzw. Positionierung des hohlzylindrischen Statorpakets 2 zur bzw. innerhalb der Haltevorrichtung 16 ist, wobei
- die zumindest eine Greifvorrichtung 15 geeignet ist das hohlzylindrische Statorpaket 2 an seiner Innenseite zu spannen und die Greifapparatur 20 über zumindest eine Antriebseinheit verfügt welche zur Positionierung entlang der Richtung der Statorpakethauptachse 3, sowie senkrecht zur Richtung der Statorpakethauptachse 3 verschiebbar ausgeführt ist, und über zumindest eine weitere Antriebseinheit verfügt, welche zur Positionierung des Statorpakets 2 in Umfangsrichtung geeignet ist und
- zumindest eine optische Sensoreinheit 17 auf oder innerhalb der Greifapparatur 20 angebracht ist, welche der Greifvorrichtung 15 und demzufolge der Mantelfläche 10 des aufgenommenen Blechpakets 2 zugewandt ist.

Die Mehrachsigkeit der Greifapparatur 20 bzw. der Greifvorrichtung 15 kann insbesondere dadurch erreicht werden, dass die Greifapparatur 20 als mehrachsiger Roboter ausgebildet ist.

In einer besonderen Ausführungsform soll die zumindest eine optische Sensoreinheit 17 mit der Greifvorrichtung 15 der Greifapparatur 20 über eine elektronische Anlagensteuerung verbunden sein.

Weiters kann vorgesehen sein, dass eine für die optische Sensoreinheit 17 transparente Schutzvorrichtung (nicht dargestellt) zwischen der optischen Sensoreinheit 17 und der Greifvorrichtung 15 angebracht ist. Der Fachmann kann für die Schutzvorrichtung geeignete, der Bauform der optischen Sensoreinheit entsprechende Materialien aus z.B. Silikatglas, Kunststoffen, oder geeigneten Keramiken wählen.

In einer alternativen Ausführungsvariante kann die Haltevorrichtung 16 senkrecht zur Statorpakethauptachse 3 verschiebbar ausgeführt sein. Dem Fachmann erschließt sich hier eindeutig, dass diese Ausführungsform eine verringerte Komplexität der Greifapparatur 20 erfordert. Wie in Fig. 5 schematisch dargestellt wird zur fluchtenden Ausrichtung der Statorpakethauptachse 3 mit der Werkzeughauptachse 13, eine horizontal bzw. senkrecht zur Statorpakethauptachse 3 bewegliche der Haltevorrichtung 16, anstatt einer Greifapparatur 20 welche mehrachsig beweglich ausgeführt sein muss.

Weiters kann vorgesehen sein, dass ein Vormaterialspeicher in Reichweite der Greifapparatur 20 vorgesehen ist. In diesem Vormaterialspeicher (nicht dargestellt) können eine Vielzahl von mit Leiterelementen 8 bestückten Statorpaketen 2 gelagert sein, auf welche die Greifapparatur 20 bei Bedarf zugreifen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Statorkomponente
- 2: Statorpaket
- 3: Statorpakethauptachse
- 4: Statorblech
- 5: Basisseite
- 6: Stirnseite
- 7: Innennut
- 8: Leiterelement
- 9: Leiterende
- 10: Mantelfläche
- 11: Positionierungsmarkierung
- 12: Umformwerkzeug
- 13: Werkzeughauptachse
- 14: Ausnehmung
- 15: Greifvorrichtung
- 16: Haltevorrichtung
- 17: Sensoreinheit
- 18: Positionsnut
- 19: Längskante
- 20: Greifapparatur
- 21: Teilwerkzeug
- 22: Arretiermittel

## Patentansprüche

1. Verfahren zur automatisierten Herstellung einer Statorkomponente (1), umfassend die Schritte:
- Bereitstellen eines hohlzylindrischen Statorpakets (2) mit einer Vielzahl von in Richtung der Statorpakethauptachse (3) gestapelten Statorblechen (4), welches eine Vielzahl von sich in Richtung der Statorpakethauptachse (3) erstreckenden, in Umfangsrichtung verteilt angeordneten und an der Innenseite des hohlzylindrischen Statorpakets (2) von einer Basisseite (5) zu einer Stirnseite (6) des Statorpakets (2) durchgehend erstreckenden Innennuten (7) aufweist die mit jeweils zumindest einem stabförmigen elektrischen Leiterelement (8) derart bestückt sind, dass basisseitig die stabförmigen elektrischen Leiterelemente (8) als Leiterenden (9) im Wesentlichen gleich weit aus dem Statorpaket (2) herausragen während stirnseitig die stabförmigen elektrischen Leiterelemente (8) als Leiterenden (9) entsprechend ihrer jeweilig vorgegebenen Länge aus dem Statorpaket (2) herausragen, und das Statorpaket (2) zumindest eine in die äußere Mantelfläche (10) des Statorpakets (2) eingebrachte, sich in Richtung der Statorpakethauptachse (3) erstreckende Positionierungsmarkierung (11) aufweist,
- Bereitstellen zumindest eines Umformwerkzeugs (12), welches zur Aufnahme der jeweiligen stirnseitigen Leiterenden (9) in Umfangsrichtung um eine Werkzeughauptachse (13) entsprechend verteilt angeordneten Ausnehmungen (14), wobei das zumindest eine Umformwerkzeug (12) zumindest entlang der Werkzeughauptachse (13) verschiebbar ausgeführt sein soll,
- Positionierung des Statorpakets (2) in einer Haltevorrichtung (16),
**dadurch gekennzeichnet dass**
- das Statorpaket (2) mittels einer in Richtung der Statorpakethauptachse (3) verschiebbaren und in Umfangsrichtung des Statorpakets (2) rotierbaren Greifvorrichtung (15) einer Greifapparatur (20) aufgegriffen wird,
- das Statorpaket (2) in Umfangsrichtung um die Statorpakethauptachse (3) rotiert wird wodurch die Positionierung der Vielzahl der stabförmigen elektrischen Leiterelemente (8) mit den dafür vorgesehenen Ausnehmungen (14) des zumindest einen Umformwerkzeugs (12, 12a) anhand der in die Mantelfläche (10) des Statorpakets (2) eingebrachten Positionsmarkierung (11) in Übereinstimmung gebracht wird,
- zumindest Teile der Mantelfläche (10) des Statorpakets (2) mittels einer optischen Sensoreinheit (17) erfasst werden,
- die Winkellage des Statorpakets (2) anhand der zumindest einen Positionsmarkierung (11) bestimmt wird,
- die Berechnung von Korrekturwerten zur Ausrichtung des Statorpakets (2) um die Statorpakethauptachse (3) mittels Anlagensteuerung durchgeführt wird,
- eine Winkelkorrektur des Statorpakets (2) durch Rotation der Greifvorrichtung (15) um die Statorpakethauptachse (3) durchgeführt wird bis die aus dem Statorpaket (2) herausragenden Leiterenden (9) des Statorpakets (2) mit der Position der in Umfangsrichtung um die Werkzeughauptachse (13) entsprechend verteilt angeordneten Ausnehmungen (14) des zumindest einen Umformwerkzeugs (12, 12a) fluchten,
- das Statorpaket (2) in der Haltevorrichtung (16) mittels einer Greifvorrichtung (15) entsprechend einer vorgegebenen Position in Richtung der Statorpakethauptachse (3) positioniert wird.

2. Verfahren nach Anspruch 1, **gekennzeichnet dadurch, dass** als zumindest eine in Richtung der Statorpakethauptachse (3) eingebrachte Positionierungsmarkierung (11) in der Mantelfläche (10) des Statorpakets (2) eine von der Basisseite (5) ausgehend über zumindest 10%, bevorzugt 25% der Höhe der gestapelten Statorbleche (4) erstreckende Positionsmarkierung (11) verwendet wird.

3. Verfahren nach Anspruch 1 oder 2, **gekennzeichnet dadurch, dass** als zumindest eine in Richtung der Statorpakethauptachse (3) eingebrachte Positionierungsmarkierung (11) in der Mantelfläche (10) des Statorpakets (2) eine im Querschnitt V- oder U-förmige Positionsnut (18) mit zwei sich in Richtung der Statorpakethauptachse (3) erstreckenden Längskanten (19) verwendet wird.

4. Verfahren nach Anspruch 3, **gekennzeichnet dadurch, dass** zur Bestimmung einer Referenzposition der zumindest einen in Richtung der Statorpakethauptachse (3) eingebrachten Positionierungsmarkierung (11) die Vermessung der beiden sich in Richtung der Statorpakethauptachse (3) erstreckenden Längskanten (19) der im Querschnitt V- oder U-förmigen Positionsnut (18) erfolgt und die Mitte der beiden Kantenpositionen in Umfangsrichtung als Referenzposition verwendet wird.

5. Verfahren nach einem der vorhergehenden Ansprüche, **gekennzeichnet dadurch, dass** als optische Sensoreinheit (17) ein Kontrastsensor verwendet wird.

6. Verfahren nach einem der vorhergehenden Ansprüche 1 bis 5, **gekennzeichnet dadurch, dass** als optische Sensoreinheit (17) ein Lasersensor verwendet wird.

7. Verfahren nach einem der vorhergehenden Ansprüche, **gekennzeichnet dadurch, dass** während der Erfassung der Mantelfläche (10) des Statorpakets (2) die optische Sensoreinheit (17) einen Winkelbereich von mehr als 5° über den Umfang der Mantelfläche (10) des Statorpakets (2) sowie eine Länge in Richtung der Statorpakethauptachse (3) ausgehend von der Basisseite (5) des Statorpakets (2) von zumindest 10%, bevorzugt 25%, vermisst.

8. Verfahren nach einem der vorhergehenden Ansprüche, **gekennzeichnet dadurch, dass** die Ausrichtung des Statorpakets (2) in Richtung der Statorpakethauptachse (3) derart erfolgt dass die Basisseite (5) des Statorpakets (2) mit einem in der Haltevorrichtung (16) vorgesehenen Anschlag in Kontakt gebracht wird.

9. Verfahren nach einem der vorhergehenden Ansprüche, **gekennzeichnet dadurch, dass** im Anschluss an die Winkelkorrektur die Haltevorrichtung (16) das Statorpaket (2) einspannt und die Greifvorrichtung (15) das Statorpaket (2) freigibt.

10. Verfahren nach Anspruch 9, **gekennzeichnet dadurch, dass** im Anschluss an die Einspannung des Statorpakets (2) die Haltevorrichtung (16) senkrecht zur Statorpakethauptachse (3) verschoben wird, bis die Statorpakethauptachse (3) mit der Werkzeughauptachse (13) des zumindest einen Umformwerkzeugs (12, 12a) fluchtend wird.

11. Verfahren nach einem der vorhergehenden Ansprüche **gekennzeichnet dadurch, dass** im Anschluss an die Einspannung des Statorpakets (2) das zumindest eine Umformwerkzeug (12, 12a) in Richtung der Statorpakethauptachse (3) an das Statorpaket (2) herangefahren wird und stirnseitig die Leiterenden (9) mit den dafür vorgesehenen Ausnehmungen (14) umschließt.

12. Verfahren nach einem der Ansprüche 9 bis 11, **gekennzeichnet dadurch, dass** mit der zumindest einen in Richtung der Statorpakethauptachse (3) eingebrachten Positionierungsmarkierung (11) ein Arretiermittel in Kontakt gebracht wird.

13. Vorrichtung für die automatisierte Herstellung einer Statorkomponente (1) die zumindest aus einem hohlzylindrischen Statorpaket (2) welches aus einer Vielzahl von in Richtung der Statorpakethauptachse (3) gestapelten Statorblechen (4), und einer Vielzahl von in Umfangsrichtung verteilten an der Innenseite des hohlzylindrischen Statorpakets (2) von einer Basisseite (5) zu einer Stirnseite (6) in Richtung der Statorpakethauptachse (3) durchgehend erstreckenden Innennuten (7) besteht die mit jeweils zumindest einem stabförmigen elektrischen Leiterelement (8) bestückt sind und wobei basisseitig die stabförmigen elektrischen Leiterelemente (8) als im Wesentlichen gleich weit aus dem Statorpaket (2) herausragende Leiterenden (9) ausgebildet sind während stirnseitig die stabförmigen elektrischen Leiterelemente (8) als herausragende Leiterenden (9) in Abhängigkeit ihrer jeweilig vorgegebenen Länge aus dem Statorpaket (2) herausragend ausgebildet sind, und das Statorpaket (2) zumindest eine in die äußere Mantelfläche (10) des Statorpakets (2) in Richtung der Statorpakethauptachse (3) erstreckende eingebrachte Positionierungsmarkierung (11) aufweist, umfassend folgende Merkmale:
- zumindest eine Haltevorrichtung (16) die geeignet für die Fixierung des hohlzylindrischen Statorpakets (2) ist,
- zumindest eine Greifapparatur (20) umfassend eine Greifvorrichtung (15) welche geeignet für den Transport bzw. Positionierung des hohlzylindrischen Statorpakets (2) zur bzw. innerhalb der Haltevorrichtung (16) ist,
**dadurch gekennzeichnet dass**
- die zumindest eine Greifvorrichtung (15) geeignet ist das hohlzylindrische Statorpaket (2) an seiner Innenseite zu spannen und die Greifapparatur (20) über zumindest eine Antriebseinheit verfügt welche zur Positionierung entlang der Richtung der Statorpakethauptachse (3), sowie senkrecht zur Richtung der Statorpakethauptachse (3) verschiebbar ausgeführt ist, und über zumindest eine weitere Antriebseinheit verfügt, welche zur Positionierung des Statorpakets (2) in Umfangsrichtung geeignet ist und
- zumindest eine optische Sensoreinheit (17) auf oder innerhalb der Greifapparatur (20) angebracht ist, welche der Greifvorrichtung (15) und demzufolge der Mantelfläche (10) des aufgenommenen Blechpakets (2) zugewandt ist.

14. Vorrichtung nach Anspruch 13, **dadurch gekennzeichnet, dass** die zumindest eine optische Sensoreinheit (17) ein Kontrastsensor ist.

15. Vorrichtung nach Anspruch 13 **dadurch gekennzeichnet, dass** die zumindest eine optische Sensoreinheit (17) ein Lasersensor ist.

16. Vorrichtung nach einem der Ansprüche 13 bis 15, **dadurch gekennzeichnet, dass** zwischen der zumindest einen optischen Sensoreinheit (17) und der Greifvorrichtung (15) der Greifapparatur (20) eine für die optische Sensoreinheit (17) transparente Schutzvorrichtung angebracht ist.

17. Vorrichtung nach einem der Ansprüche 13 bis 16, **dadurch gekennzeichnet, dass** die optische Sensoreinheit (17) mit der Greifvorrichtung (15) über eine elektronische Anlagensteuerung verbunden ist.

18. Vorrichtung nach einem der Ansprüche 13 bis 17, **dadurch gekennzeichnet, dass** in der Haltevorrichtung (16) ein senkrecht zur Richtung der Statorpakethauptachse (3) eingebrachte Positionierungsmarkierung (11) verschiebbares Arretiermittel (22) vorgesehen ist.

19. Vorrichtung nach einem der Ansprüche 13 bis 18, **dadurch gekennzeichnet, dass** die Haltevorrichtung (16) senkrecht zur Statorpakethauptachse (3) verschiebbar ist.

## Claims

1. A method for automatedly manufacturing a stator component (1), comprising the steps:
- providing a hollow-cylindrical stator pack (2) having a plurality of stator laminations (4) stacked in the direction of the main axis of the stator pack (3), comprising a plurality of internal grooves (7) extending in the direction of the main axis of the stator pack (3), arranged to be distributed in the circumferential direction and extending continuously from a base side (5) to a front side (6) of the stator pack (2) on the inside of the hollow-cylindrical stator pack (2), said internal grooves (7) being each equipped with a rod-shaped electrical conductor element (8) such that the rod-shaped electrical conductor elements (8) project substantially to the same distance out of the stator pack (2) at the base side as conductor ends (9) while at the front side the rod-shaped electrical conductor elements (8) project out of the stator pack (2) as conductor ends (9) according to their respectively prescribed length, and the stator pack (2) has at least one positioning mark (11), which is placed in the outer lateral surface (10) of the stator pack (2) and extends in the direction of the main axis of the stator pack (3),
- providing at least one forming tool (12), which for receiving the respective front-side conductor ends (9) comprises recesses (14) distributed in the circumferential direction around a main tool axis (13), wherein the at least one forming tool (12) is designed to be displaceable at least along the main tool axis (13),
- positioning the stator pack (2) in a holding device (16),
**characterized in that**
- the stator pack (2) is picked up by means of a gripping device (15) of a gripping apparatus (20) which is displaceable in the direction of the main axis of the stator pack (3) and rotatable in the circumferential direction of the stator pack (2),
- the stator pack (2) is rotated in the circumferential direction about the main axis of the stator pack (3), whereby the positioning of the plurality of rod-shaped electrical conductor elements (8) is brought into agreement with the recesses (14) provided for this purpose in the at least one forming tool (12, 12a) by means of the positioning mark (11) placed in the lateral surface (10) of the stator pack (2),
- at least parts of the lateral surface (10) of the stator pack (2) are detected by means of an optical sensor unit (17),
- the angular position of the stator pack (2) is determined by means of the at least one positioning mark (11),
- the calculation of correction values for the orientation of the stator pack (2) about the main axis of the stator pack (3) is carried out by means of system control,
- an angle correction of the stator pack (2) is carried out by rotating the gripping device (15) about the main axis of the stator pack (3) until the conductor ends (9) of the stator pack (2) projecting from the stator pack (2) are aligned with the position of the recesses (14) of the at least one forming tool (12, 12a), which are distributed correspondingly in the circumferential direction about the main tool axis (13),
- the stator pack (2) is positioned in the holding device (16) by means of a gripping device (15) according to a predetermined position in the direction of the main axis of the stator pack (3).

2. The method according to claim 1, **characterized in that** as at least one positioning mark (11) placed in the direction of the main axis of the stator pack (3), a positioning mark (11) extending from the base side (5) over at least 10%, preferably 25% of the height of the stacked stator laminations (4) is used in the lateral surface (10) of the stator pack (2).

3. The method according to claim 1 or 2, **characterized in that** a positioning mark (11) placed in the lateral surface (10) of the stator pack (2) in the direction of the main axis of the stator pack (3), is a positioning groove (18) with a V- or U-shaped cross-section with two longitudinal edges (19) extending in the direction of the main axis of the stator pack (3).

4. The method according to claim 3, **characterized in that**, in order to determine a reference position of the at least one positioning mark (11) placed in the direction of the main axis of the stator pack (3), the measurement of the two longitudinal edges (19) of the positioning groove (18) which is V-shaped or U-shaped in cross-section extending in the direction of the main axis of the stator pack (3) is carried out and the center of the two edge positions in the circumferential direction is used as a reference position.

5. The method according to one of the preceding claims, **characterized in that** a contrast sensor is used as the optical sensor unit (17).

6. The method according to one of the preceding claims 1 to 5, **characterized in that** a laser sensor is used as the optical sensor unit (17).

7. The method according to one of the preceding claims, **characterized in that**, during the detection of the lateral surface (10) of the stator pack (2), the optical sensor unit (17) measures an angular range of more than 5° over the circumference of the lateral surface (10) of the stator pack (2) as well as a length in the direction of the main axis of the stator pack (3) starting from the base side (5) of the stator pack (2) of at least 10%, preferably 25%.

8. The method according to one of the preceding claims, **characterized in that** the alignment of the stator pack (2) in the direction of the main axis of the stator pack (3) is carried out such that the base side (5) of the stator pack (2) is brought into contact with a stop provided in the holding device (16).

9. The method according to one of the preceding claims, **characterized in that** after the angle correction, the holding device (16) clamps the stator pack (2), and the gripping device (15) releases the stator pack (2).

10. The method according to claim 9, **characterized in that** after clamping of the stator pack (2), the holding device (16) is displaced perpendicularly to the main axis of the stator pack (3) until the main axis of the stator pack (3) is aligned with the main tool axis (13) of the at least one forming tool (12, 12a).

11. The method according to one of the preceding claims, **characterized in that** after clamping of the stator pack (2), the at least one forming tool (12, 12a) is moved to the stator pack (2) in the direction of the main axis of the stator pack (3) and encloses the conductor ends (9) with the recesses (14) provided for this purpose at the front side.

12. The method according to one of claims 9 to 11, **characterized in that** a locking means is brought into contact with the at least one positioning mark (11) placed in the direction of the main axis of the stator pack (3).

13. A device for automatedly manufacturing a stator component (1) comprising at least one hollow-cylindrical stator pack (2) having a plurality of stator laminations (4) stacked in the direction of the main axis of the stator pack (3), and having a plurality of internal grooves (7) extending in the direction of the main axis of the stator pack (3), arranged to be distributed in the circumferential direction and extending continuously from a base side (5) to a front side (6) on the inside of the hollow-cylindrical stator pack (2), said internal grooves (7) being each equipped with a rod-shaped electrical conductor element (8) and wherein on the base side, the rod-shaped electrical conductor elements (8) are formed as conductor ends (9) projecting substantially to the same distance out of the stator pack (2) while at the front side the rod-shaped electrical conductor elements (8) project out of the stator pack (2) as conductor ends (9) according to their respectively prescribed length, and the stator pack (2) has at least one positioning mark (11), which is placed in the outer lateral surface (10) of the stator pack (2) and extends in the direction of the main axis of the stator pack (3), comprising the following features:
- at least one holding device (16) suitable for fixation of the hollow-cylindrical stator pack (2),
- at least one gripping apparatus (20) comprising a gripping device (15) suitable for the transport and/or positioning of the hollow-cylindrical stator pack (2) to and/or within the holding device (16),
**characterized in that**
- the at least one gripping device (15) is suitable for clamping the hollow-cylindrical stator pack (2) on its inner side and the gripping apparatus (20) has at least one drive unit which is designed to be displaceable for positioning along the direction of the main axis of the stator pack (3) as well as perpendicularly to the direction of the main axis of the stator pack (3), and has at least one further drive unit which is suitable for positioning the stator pack (2) in the circumferential direction and
- at least one optical sensor unit (17) is mounted on or within the gripping apparatus (20), said sensor unit (17) facing the gripping device (15) and consequently the lateral surface (10) of the received laminated core (2).

14. The device according to claim 13, **characterized in that** the at least one optical sensor unit (17) is a contrast sensor.

15. The device according to claim 13, **characterized in that** the at least one optical sensor unit (17) is a laser sensor.

16. The device according to one of claims 13 to 15, **characterized in that** a protective device transparent for the optical sensor unit (17) is attached between the at least one optical sensor unit (17) and the gripping device (15) of the gripping apparatus (20).

17. The device according to one of claims 13 to 16, **characterized in that** the optical sensor unit (17) is connected to the gripping device (15) via an electronic system control.

18. The device according to one of claims 13 to 17, **characterized in that** the holding device (16) is provided with a locking means (22) displaceable perpendicularly to the positioning mark (11) placed in the direction of the main axis of the stator pack (3).

19. The device according to one of claims 13 to 18, **characterized in that** the holding device (16) is displaceable perpendicularly to the main axis of the stator pack (3).

## Revendications

1. Procédé de fabrication automatisée d'un composant de stator (1) comprenant les étapes suivantes :
- mise à disposition d'un empilement de stator cylindrique creux (2) avec une pluralité de tôles de stator (4) empilées en direction de l'axe principal de l'empilement de rotor (3), qui comprend une pluralité de rainures internes (7) s'étendant en direction de l'axe principal de l'empilement de stator (3), disposées de manière répartie sur la circonférence, et s'étendant de manière continue à l'intérieur de l'empilement de stator cylindrique creux (2) d'une face de base (5) vers une face frontale (6) de l'empilement de stator (2), qui sont munies chacune d'un élément électro-conducteur (8) en forme de barre, de façon à ce que, du côté de la base, les éléments électro-conducteurs en forme de barres (8) dépassent, en tant qu'extrémités de conducteurs (9), globalement aussi loin hors de l'empilement de stator (2), tandis que, du côté frontal, les éléments électro-conducteurs (9) en forme de barres (8) dépassent hors de l'empilement de stator (2) en fonction de leur longueur respectivement prédéterminée et l'empilement de stator (2) comprend au moins un marquage de positionnement (11), réalisé dans la surface d'enveloppe externe (10) de l'empilement de stator (2) et s'étendant dans la direction de l'axe principal de l'empilement de stator (3),
- mise à disposition d'au moins un outil de formage (12), qui comprend, pour le logement des extrémités de conducteurs côté frontal (9), des évidements (14) disposés sur la circonférence autour d'un axe principal d'outil (13) et répartis de manière correspondante, dans lequel l'au moins un outil de formage (12) peut être réalisé de façon à coulisser au moins le long de l'axe principal de l'outil (13),
- positionnement de l'empilement de stator (2) dans un dispositif de maintien (16), **caractérisé en ce que**
- l'empilement de stator (2) est saisi, au moyen d'un dispositif de préhension (15) d'un appareil de préhension (20), coulissant dans la direction de l'axe principal de l'empilement de stator (3) et rotatif dans la direction de la circonférence de l'empilement de stator (2),
- l'empilement de stator (2) est tourné dans la direction de la circonférence autour de l'axe principal de l'empilement de stator (3), ce qui permet de faire correspondre le positionnement de la pluralité des éléments électro-conducteurs en forme de barres (8) avec les évidements (14), prévus à cet effet, de l'au moins un outil de formage (12, 12a), à l'aide du marquage de position (11) réalisé dans la surface d'enveloppe (10) de l'empilement de stator (2),
- au moins des parties de la surface d'enveloppe (10) de l'empilement de stator (2) sont détectées au moyen d'une unité de capteur optique (17),
- la position angulaire de l'empilement de stator (2) est déterminée à l'aide de l'au moins un marquage de position (11),
- le calcul de valeurs de correction pour l'orientation de l'empilement de stator (2) autour de l'axe principal de l'empilement de stator (3) est effectué au moyen d'un contrôle d'installation,
- une correction angulaire de l'empilement de stator (2) est effectuée par rotation du dispositif de préhension (15) autour de l'axe principal de l'empilement de stator (3) jusqu'à ce que les extrémités de conducteurs (9) de l'empilement de stator (2), dépassant hors de l'empilement de stator (2), soient alignés avec la position des évidements (14), répartis de manière correspondante dans la direction de la circonférence autour de l'axe principal de l'outil (13), de l'au moins un outil de formage (12, 12a),
- l'empilement de stator (2) est positionné dans le dispositif de maintien (16) au moyen d'un dispositif de préhension (15) en fonction d'une position prédéterminée dans la direction de l'axe principal de l'empilement de stator (3).

2. Procédé selon la revendication 1, **caractérisé en ce que**, en tant qu'au moins un marquage de positionnement (11) réalisé dans la direction de l'axe principal de l'empilement de stator (3), dans la surface d'enveloppe (10) de l'empilement de stator (2), on utilise un marquage de positionnement (11) s'étendant à partir de la face de base (5) sur au moins 10 %, de préférence 25 % de la hauteur des tôles de stator empilées (4).

3. Procédé selon la revendication 1 ou 2, **caractérisé en ce que**, en tant qu'au moins un marquage de positionnement (11) réalisé dans la direction de l'axe principal de l'empilement de stator (3), dans la surface d'enveloppe (10) de l'empilement de stator (2), on utilise une rainure de position (18) à section transversale en forme de V ou de U, avec deux arêtes longitudinales (19) s'étendant dans la direction de l'axe principal de l'empilement de stator (3).

4. Procédé selon la revendication 3, **caractérisé en ce que**, pour la détermination d'une position de référence de l'au moins un marquage de positionnement (11) réalisé dans la direction de l'axe principal de l'empilement de stator (3), on mesure des deux arêtes longitudinales (19) de la rainure de position en forme de V ou de U (18) s'étendant dans la direction de l'axe de l'empilement de stator (3) et le centre des deux positions d'arêtes dans la direction de la circonférence est utilisée comme position de référence.

5. Procédé selon l'une des revendications précédentes, **caractérisé en ce que**, en tant qu'unité de capteur optique (17), un capteur de contraste est utilisé.

6. Procédé selon l'une des revendications précédentes 1 à 5, **caractérisé en ce que**, en tant qu'unité de capteur optique (17), un capteur laser est utilisé.

7. Procédé selon l'une des revendications précédentes, **caractérisé en ce que**, pendant la détection de la surface d'enveloppe (10) de l'empilement de stator (2), l'unité de capteur optique (17) mesure un intervalle angulaire de plus de 5° au-delà de la circonférence de la surface d'enveloppe (10) de l'empilement de stator (2) ainsi qu'une longueur dans la direction de l'axe principal de l'empilement de stator (3), à partir de la face de base (5) de l'empilement de stator (2), d'au moins 10 %, de préférence 25 %.

8. Procédé selon l'une des revendications précédentes, **caractérisé en ce que** l'orientation de l'empilement de stator (2) dans la direction de l'axe principal de l'empilement de stator (3) est effectuée de façon à ce que la face de base (5) de l'empilement de stator (2) soit mise en contact avec une butée prévue dans le dispositif de maintien (16).

9. Procédé selon l'une des revendications précédentes, **caractérisé en ce que**, après la correction angulaire, le dispositif de maintien (16) serre l'empilement de stator (2) et le dispositif de préhension (15) libère l'empilement de stator (2).

10. Procédé selon la revendication 9, **caractérisé en ce que**, après le serrage de l'empilement de stator (2), le dispositif de maintien (16) est déplacé perpendiculairement à l'axe principal de l'empilement (3), jusqu'à ce que l'axe principal de l'empilement de stator (3) soit aligné avec l'axe principal d'outil (13) de l'au moins un outil de formage (12, 12a).

11. Procédé selon l'une des revendications précédentes, **caractérisé en ce que**, après le serrage de l'empilement de stator (2), l'au moins un outil de formage (12, 12a) est approché de l'empilement de stator (2) dans la direction de l'axe principal de l'empilement de stator (3) et, sur la face frontale, les extrémités de conducteurs (9) sont entourées par les évidements (14) prévus à cet effet.

12. Procédé selon l'une des revendications 9 à 11, **caractérisé en ce qu'**un moyen de blocage est mis en contact avec l'au moins un marquage de positionnement (11) réalisé dans la direction de l'axe principal de l'empilement de stator (3).

13. Dispositif pour la fabrication automatisée d'un composant de stator (1), qui est constitué d'au moins un empilement de stator cylindrique creux (2), qui est constitué d'une pluralité de tôles de stator (4) empilées dans la direction de l'axe principal de l'empilement de stator (3) et d'une pluralité de rainures internes (7) réparties sur la circonférence à l'intérieur de l'empilement de stator cylindrique creux (2), s'étendant de manière continue d'une face de base (5) vers une face frontale (6), dans la direction de l'axe principal de l'empilement de stator (3), qui sont munies chacune d'au moins un élément électro-conducteur en forme de barre (8) et dans lequel, du côté de base, les éléments électro-conducteurs en forme de barres (8) sont conçus comme des extrémités de conducteurs (9) dépassant hors de l'empilement de stator (2), tandis que, côté frontal, les éléments électro-conducteurs en forme de barres (8) sont conçus comme des extrémités de conducteurs (9) dépassant en fonction de leur longueur respectivement prédéterminée hors de l'empilement de stator (2) et l'empilement de stator (2) comprend un marquage de positionnement (11) réalisé dans la surface d'enveloppe externe (10) de l'empilement de stator (2) dans la direction de l'axe principal de l'empilement de stator (3), présentant les caractéristiques suivantes :
- au moins un dispositif de maintien (16) qui est conçu pour la fixation de l'empilement de stator cylindrique creux (2),
- au moins un appareil de préhension (20) comprenant un dispositif de préhension (15) qui est conçu pour le transport respectivement le positionnement de l'empilement de stator cylindrique creux (2) vers respectivement à l'intérieur du dispositif de maintien (16),
**caractérisé en ce que**
- l'au moins un dispositif de préhension (15) est conçu pour serrer l'empilement de stator cylindrique creux (2) à l'intérieur et l'appareil de préhension (20) disposé d'au moins une unité d'entraînement qui est conçue de façon à coulisser, pour le positionnement le long de la direction de l'axe principal de l'empilement de stator (3) ainsi que perpendiculairement à la direction de l'axe principal de l'empilement de stator (3) et disposé d'au moins une autre unité d'entraînement qui est conçue pour le positionnement de l'empilement de stator (2) dans la direction de la circonférence et
- au moins une unité de capteur optique (17) est montée sur ou à l'intérieur de l'appareil de préhension (20), qui est orientée vers le dispositif de préhension (15) et donc vers la surface d'enveloppe (10) de l'empilement de tôles (2) logé.

14. Dispositif selon la revendication 13, **caractérisé en ce que** l'au moins une unité de capteur optique (17) est un capteur de contraste.

15. Dispositif selon la revendication 13, **caractérisé en ce que** l'au moins une unité de capteur optique (17) est un capteur laser.

16. Dispositif selon l'une des revendications 13 à 15, **caractérisé en ce que**, entre l'au moins une unité de capteur optique (17) et le dispositif de préhension (15) de l'appareil de préhension (20), est monté un dispositif de protection transparente pour l'unité de capteur optique (17).

17. Dispositif selon l'une des revendications 13 à 16, **caractérisé en ce que** l'unité de capteur optique (17) est reliée avec le dispositif de préhension (15) par l'intermédiaire d'un contrôle d'installation électronique.

18. Dispositif selon l'une des revendications 13 à 17, **caractérisé en ce que**, dans le dispositif de maintien (16), est prévu un moyen de blocage (22) coulissant perpendiculairement à un marquage de positionnement (11) réalisé dans la direction de l'axe principal de l'empilement de stator (3).

19. Dispositif selon l'une des revendications 13 à 18, **caractérisé en ce que** le dispositif de maintien (16) coulisse perpendiculairement à l'axe principal de l'empilement de stator (3).
